# EUROPEAN PATENT SPECIFICATION

(11) **EP 1 323 021 B1**
(45) Date of publication and mention of the grant of the patent: **28.05.2008**
(21) Application number: 01984269.9
(22) Date of filing: 09.07.2001
(51) Int. Cl.: G06F 3/00

(54) **DEVICE FOR USE AS A CLIENT IN A CLIENT-SERVER SYSTEM**
EINRICHTUNG ZUR VERWENDUNG ALS EIN CLIENT IN EINEM CLIENT/SERVER-SYSTEM
DISPOSITIF A USAGE D'UN CLIENT DANS UN SYSTEME CLIENT-SERVEUR

(30) Priority: 14.07.2000 GB 0017395
(43) Date of publication of application: 02.07.2003
(73) Proprietor: Nokia Corporation, 02150 Espoo (FI)
(72) Inventor: NIELSEN, Peter, Dam, DK-2700 Broenshoej (DK)
(74) Representative: Read, Matthew Charles
(86) International application number: PCT/EP2001/007867
(87) International publication number: WO 2002/006938

(56) References cited:
- EP-A- 0 817 448
- US-A- 5 991 396
- US-A- 6 088 594

## Description

This invention relates to a device for use as a client in a client-server system, such as a mobile telephone handset or a personal digital assistant (PDA) enabled for wireless application protocol operation.

Conventional mobile telecommunications devices, such as telephone handsets, have been designed primarily for speech calls and have only a limited capability for handling data. For example, in GSM, a short message service (SMS) has been provided to permit the user to send and receive short text messages that can be transmitted through a cellular public land mobile network (PLMN). A conventional mobile handset has a display screen and an associated key pad with keys that are assigned predetermined functions, typically alphanumeric keys, which have more than one letter associated with them. The letters associated with the keys can be selected individually by relatively rapid, repeated key operations and then waiting for a longer period until a cursor moves on the display of the handset to the next portion of the text of a SMS message. This keying method is described in US-A-5991396.

A conventional mobile telephone handset may also include so-called soft keys which can have programmable functions which are displayed on the display screen. Our EP-A-0817448 describes an arrangement in which the soft keys can be operated quickly to scroll between menu options and then after waiting for a timeout, to select a displayed menu option. More recently, recommendations have been developed to provide a wireless application protocol (WAP) to promote common standards and specifications for data services that operate over wireless communication networks. WAP enabled telephone handsets have been developed which allow the user to access remote servers. Data content is provided in a markup language, similar to conventional hypertext markup language (HTML), known as wireless markup language (WML), which is configured to allow data to be displayed as a deck of individual card which are of a size suited for display on the relatively small display screen usually available on a mobile device such as a cellular telephone handset or PDA.

A WAP server can be accessed by dialling an individual telephone number associated with a WAP gateway which acts as a proxy server between the WAP server itself and the mobile device which acts as a client. Thus, individual WAP servers can be accessed by a user, by dialling the telephone numbers associated with the individual WAP gateways that provide access to the servers.

An example of a WAP enabled mobile device is described in US-A-6088594. The mobile device runs a browser to display data from the server and navigation between different decks and cards thereof is controlled by the user with keys on the mobile device. Typically, the mobile device has a smaller number of keys than a conventional personal computer and does not have a mouse, and so navigating with the browser of the mobile device gives rise to a problem in terms of ergonomics, in relation to ease of browser controllability for the user.

The present invention seeks to overcome this problem.

The invention provides a mobile telecommunications device, including a user operable keypad with keys that each have a predetermined assigned function, a display device, a processor operable to provide user selectable displays of data derived from a server and a browser for displaying and navigating the data derived from the server in the display device, the processor being controllable by program elements associated with the display of data from the server that are selectable as different options in the display, wherein a key is operable in first and second time periods to provide first and second different key functionalities for controlling the display in the browser provided by the display device, the time periods for the different functionalities being defined by a first key functionality window of a predetermined duration occurring in response to commencement of a display of data by the display device, and a second key functionality window that occurs after expiry of the first key functionality window, so that operation of the key within the first key functionality window invokes a first key functionality and operation of the key within the second key functionality window invokes a second key functionality, and wherein the operation of the key within the first key functionality window invokes a functionality wherein a link is selected depending upon the depressed key.

Operation of the key within the second key functionality window may invoke a functionality dependent upon a prior selection made in the display. A focus may be electively movable to select different options in the display so that the invoked second key functionality is dependent upon the option selected by means of the focus.

The program elements may have an attribute associated with a respective predetermined assigned key function associated with an individual key of the keypad and said attribute can be invoked selectively in response to operation of the individual key in said second time period. The program elements may be from a text markup language such as WML and said attribute may correspond to an access key functionality. The device may be WAP enabled.

The device according to the invention may comprise a mobile telecommunications handset or other mobile device such as a PDA.

The invention also provides a method comprising operating a mobile telecommunications device as a client in a client-server system, the device including a user operable keypad with keys that each have a predetermined assigned function, a display device, a processor operable to provide user selectable displays of data derived from the server and a browser for displaying and navigating the data derived from the server in the display device, the processor being controllable by program elements associated with the display of data from the server that are selectable as different options in the display and operating a key of the keypad in one of first and second time periods provides one of first and second different key functionalities for controlling the display in the browser provided by the display device, wherein the time periods for the different key functionalities are defined by a first key functionality window of a predetermined duration occurring in response to commencement of a display of data by the display device, and a second key functionality window that occurs after expiry of the first key functionality window, whereby operation of the key within the first key functionality window invokes the first key functionality and operation of the key within the second key functionality window invokes the second key functionality, and wherein operation of the key within the first key functionality window invokes a functionality wherein a link is selected depending upon the depressed key.

In order that the invention may be more fully understood an embodiment thereof will now be described by way of example with reference to the accompanying drawings in which:
Figure 1 is a schematic block diagram illustrating a mobile telephone handset which can communicate through PLMN to a WAP server;
Figure 2 is a schematic block diagram of the circuitry of the mobile handset shown in Figure 1;
Figure 3 illustrates schematically the display of the handset and the associated keys 4;
Figures 4 illustrates a scrolling functionality associated with key 4c;
Figure 5A illustrates an initial display of a WML deck;
Figure 5B illustrates a display resulting from a relatively long key press of the 2-key;
Figure 5C illustrates a corresponding display for a relatively short key press of the 2-key;
Figure 6 is a flow diagram of process steps carried out by the micro-controller 8;
Figure 7 is a timing diagram for a second embodiment of the invention;
Figure 8A illustrates an initial display of a WML deck for the second embodiment;
Figure 8B illustrates a display produced by operation of the 2-key during a first key functionality window;
Figure 8C illustrates an initial WML deck with the input element selected by means of the focus;
Figure 8D illustrates the display produced by operation of the 2-key during the second key functionality period;
Figure 8E illustrates the initial display with the first internal link option selected;
Figure 8F illustrates the display produced when the 2-key is depressed during the second key functionality period for the display of Figure 8E;
Figure 8G illustrates the initial display with an external link selected by the focus;
Figure 8H illustrates the display produced when the 2-key is depressed during the second period in respect of the display of Figure 8G; and
Figure 9 is a flow chart of process steps carried out by the micro-controller 8 for the second embodiment.

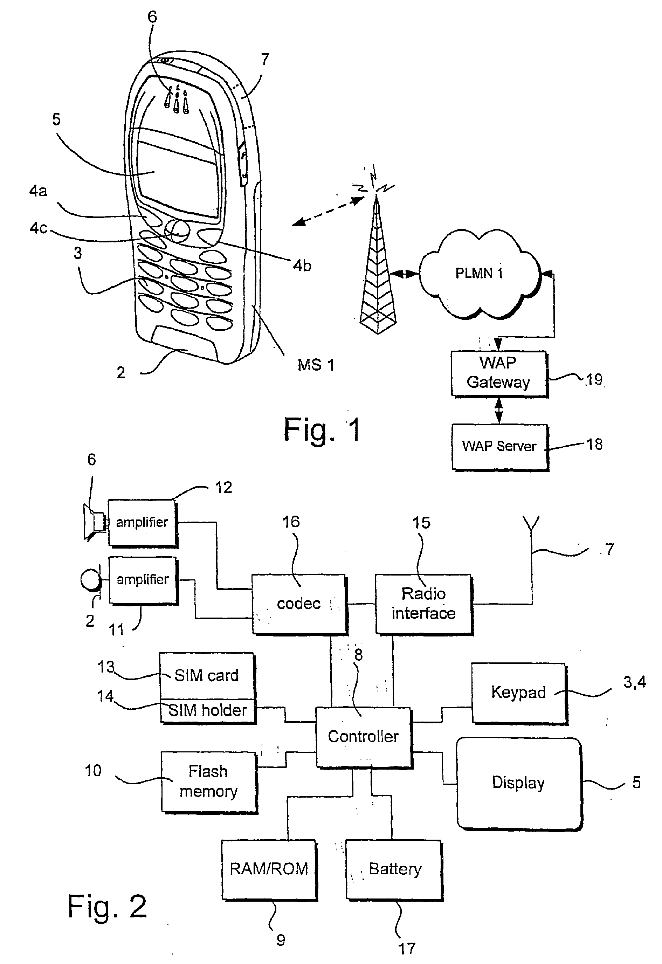

In Figure 1, a mobile station in the form of a battery driven telephone cellular handset MS 1, is shown schematically in radio communication with PLMN 1. The mobile handset MS1, includes a microphone 2, keypad 3, soft keys 4, a liquid crystal display device 5, ear-piece 6 and internal antenna 7. As will be explained in more detail, the handset 1 is WAP enabled.

The circuitry of the handset MS 1 is shown in more detail in Figure 2. Signal processing is carried out under the control of a digital micro-controller 8 which has an associated RAM/ROM 9 and flash memory 10. Electrical analogue audio signals are produced by microphone 2 and amplified by pre-amplifier 11. Similarly, analogue audio signals are fed to the ear-piece 6 through an amplifier 12. The micro-controller receives instruction signals from the keypad and so-called soft keys 4 and controls operation of the LCD display 5.

Information concerning the identity of the user is held on a smart card 13 in the form of a GSM SIM card which contains the usual GSM international mobile subscriber identity and encryption Kᵢ that is used for encoding the radio transmission in a manner well known ***per se**.* The SIM card 13 is removably received in a SIM card holder 14. Radio signals are transmitted and received by means of the antenna 7 connected through a rf stage 15 to a codec 16 configured to process signals under the control of a micro-controller 8. Thus, in use, for speech, the codec 16 receives analogue signals from the microphone amplifier 11, digitises them into a form suitable for transmission and feeds them to the rf stage 15 for transmission through antenna element 7 to PLMN 1 shown in Figure 1. Similarly, signals received from PLMN 1 are fed through the antenna element to be demodulated by the rf stage 15 and fed to codec 16 so as to produce analogue signals fed to amplifier 12 and ear-piece 6.

The handset 1 is WAP enabled and capable of receiving data in a predetermined channel e.g. for GSM, at 9.6Kbit/sec. Also, the handset may be configured to receive a high speed circuit switch data (HSCSD) according to the GSM recommendations, at a data rate from 14.4-43.2 Kbit/sec. It will however be understood that the invention is not restricted to any particular data rate and that higher rates could be used. The WAP content and its applications are specified in a well known set of content formats based on familiar www content formats. WAP is disclosed in the Wireless Application Protocol Architecture Specification; version 30 April 1998, published by the Wireless Application Protocol Architecture Working Group (see also http://www.wapforum.org/docs/technical.htm/arch-30-apr-98.pdf).

As known in the art, the WAP environment (WAE) provides a browser e.g. a micro-browser operable on the handset MS 1 as a client, for connection to WAP servers. The browser is configured to operate with WML which, as previously mentioned comprises a lightweight markup language similar to HTML but optimised for use in hand-held mobile terminals, WML script - a lightweight scripting language similar to JAVA Script^{™}, wireless telephony application (WTA, WTAI) telephony services and programming interfaces, and content formats - a well known set of data formats including images, phone book records and calendar information.

Data can be downloaded to the browser from a WAP server such as server 18 shown in Figure 1. The server 18 provides WML decks of cards, corresponding to conventional pages of HTML such that a deck can be downloaded to the handset MS1 and the individual cards manipulated for display by means of the keys 3, 4. The server 18 is accessed through a gateway 19 which acts as a proxy server. The handset MS 1 can access the gateway 19 by dialling a predetermined telephone number.

The WML data downloaded from the server 18 may be held in the RAM 9 or the flash memory 10. The microcontroller 8 provides the browser functionality and causes individual cards of the downloaded WML deck to be presented to the user in the browser on the screen of the display 5, and the display can be manipulated by means of the keys 4.

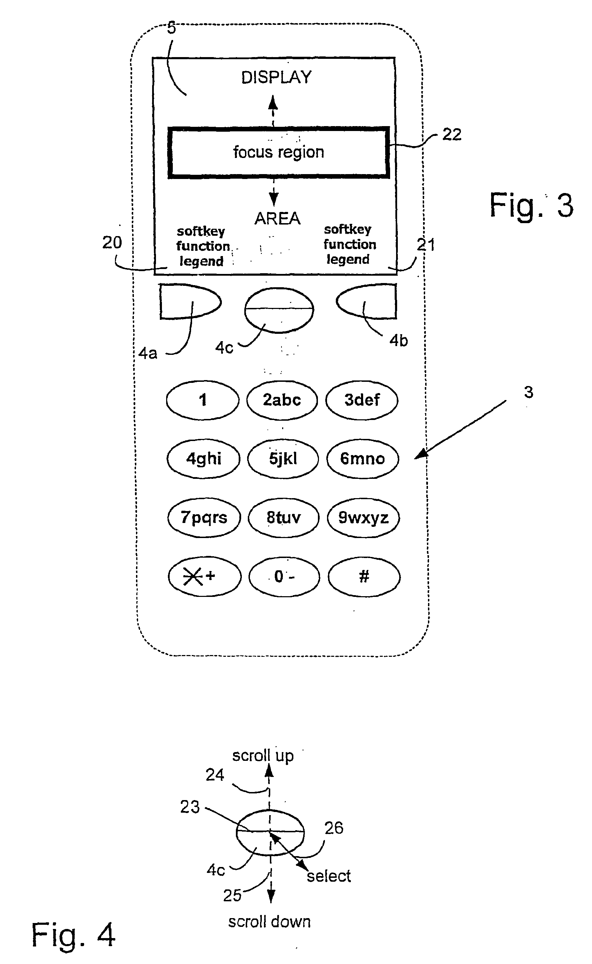

The functionality of the soft keys 4 will now be described in more detail with reference to Figure 3. The keys 4 are disposed adjacent the underside of the display 5. The keys 4a, 4b comprise manually depressible buttons. Their functionality can be pre-programmed depending upon the task performed. The function attributed to the keys is displayed on the display 5 as soft key function legends 20, 21 adjacent to the respective keys 4a, 4b.

The key 4c comprises a roller device to perform a scrolling function for the display 5. In use, an active or focus region 22 is provided on the display which, as explained in more detail later, can be moved around the display area. The roller 4c may comprise a 3-way roller, as shown in Figure 4. The roller may be pushed by the user's finger, to pivot about axis 23. When pushed upwardly, in the direction of arrow 24, a "scroll-up" function is performed. Conversely, when pushed downwardly in the direction of arrow 25 a "scroll-down" function is performed. Additionally, the roller 4c may be manually depressible inwardly of the handset, in the direction of arrow 26, to perform a "select" function. The key 4c may be further configured as a five-way roller, not shown, so as additionally to perform right and left scrolling functions. Alternatively, the key 4c may comprise a rollerball, a touch pad or other navigation device of the type used in laptop computers. In this example, the focus region 22 is delineated by a rectangular box which is moved around the screen of the display 5. However, the focus region can be provided in different ways, such as a region highlighted with a different intensity or colour from the rest of the display, an underlining of a menu option or by means of a pointer movable across the display in the manner of a conventional mouse pointer.

The keypad 3 is shown schematically in Figure 4 and includes keys corresponding to the numbers 0 - 9 together with the usual # and * keys. As known in the art, the keys can also be used to select alpha characters, for example to produce a short text message known as a SMS. The selected key is pressed successively relatively quickly to change the character selected by the key between the characters marked on the key concerned, with each successive key operation. When the desired character is displayed, the user waits and a timeout occurs with the result that the displayed character becomes the selected character. This functionality can be found in conventional Nokia mobile telephone handsets such as the Model 2110.

As previously explained, the information displayed on the display 5 comprises WML data. The specification for WML can be found in WAP WML Version 4 - November 1999 "Wireless Application Protocol Wireless Mark Up Language Specification Version 1.2" published by Wireless Application Protocol Forum Limited, which can also be found at http//www1.wapforum.org/tech/documents/spec-wml-19991104.pdf.

The deck is the smallest unit of WML that is transmitted to the WAP device. A deck is conceptually one or more pages of information much like a web page with which the user interacts.

The deck commences with a prologue and is delimited by a <wml> tag. This syntax of a deck is set out below.

```
 <wml>
  <head>
  <template>
  <card>
 </wml>
```

The <head> element contains optional information about the deck as a whole including access control information to control access to the deck so that only permitted links may gain access.

The <template> element contains optional information about deck-level bindings and will not be described in detail herein - reference is directed to Wireless Application Protocol Wireless Mark Up Language Specification Version 1.2, *supra* for further information.

The <card> element defines the user interface and processing logic of the deck. As previously mentioned, the deck may include a number of cards.

As with HTML, links can be defined. In WML the links can be between decks or cards. The links are defined in WML by an ANCHOR element which defines the head of the link. WML also includes an element A which is a shorthand version of the ANCHOR element.

Furthermore, WML allows a user to insert text, for example to enter a user name, by means of an element INPUT. This element thus specifies a text entry object, in a similar manner to HTML.

### accesskey attribute

Certain WML elements have an attribute that assigns an access key to the element. In this way, the WML elements can be given a particular focus by operating a predetermined key on the keyboard 3,4 of the device. The attribute is defined in WML as accesskey and is an attribute of the WML elements: ANCHOR, A and INPUT.

An example is given below of the use of the accesskey element in a link using the A element (with A being shown in lower case i.e. "a" below):
<a accesskey="1"
href=http://someplace.com/specification/contents.html> Table of Contents</a>

In this example, when the key "1" on the keypad is pressed, a link to the domain "someplace" is actuated, to locate the contents of a table.

A more detailed description of the attribute accesskey and the WML elements: ANCHOR, A and INPUT is given in Wireless Application Protocol Wireless Mark Up Language Specification Version 1.2, *supra.*

### First embodiment

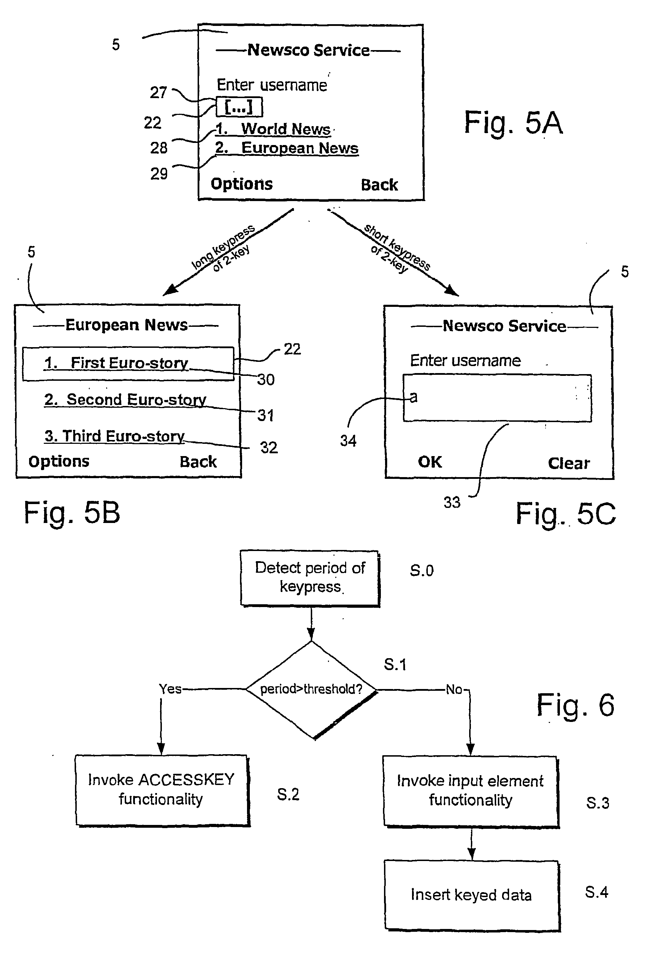

Figure 5A illustrates a display on the display device 5 of the handset MS1 that comprises an initial card in a deck of WML data downloaded from WAP server 18. In this example, the downloaded WML data relates to a news service from a company "Newsco". As shown in Figure 5A, the displayed card includes an input 27, corresponding to the WML element INPUT together with links 28, 29 to "World News" and "European News". The links 28, 29 correspond to ANCHOR elements previously described. In the display of Figure 5a, the focus 22 is shown at the input 27.

In accordance with the invention, an improved way of selecting items from the display is provided. The user choice can be determined by the duration for which a particular key is pressed by the user. If a key is pressed for a period longer than a predetermined threshold e.g. five seconds, a selection corresponding to the key is made. However, if the key is pressed for a duration shorter than the threshold, a character corresponding to the key is inserted into a text editor corresponding to the input 27, irrespective of the location of focus 22.

Thus, a relatively long key press of a particular key produces a corresponding accesskey whereas a relatively short key press of a particular key causes a character corresponding to the key to be inserted into the text editor associated with input 27.

This will now be explained in more detail with reference to Figures 5B and C in relation to operation of the 2-key of the key pad 3 shown in Figure 3.

### Long key press of 2-key

When the 2-key is pressed for a period greater than the aforementioned threshold period e.g. five seconds, a display corresponding to Figure 5B is provided on the display device 5. The relatively long operation of the 2-key invokes accesskey functionality with a result that the link corresponding to the number "2" i.e. link 29 - European News, is selected. As a result, a card corresponding to the European News link is displayed which itself contains three numbered links: 1 - first Euro story, referenced 30, 2 - second Euro story, referenced 31 and 3 - third Euro story, referenced 32. Details of these Euro stories can be individually selected by selecting one of the links 30, 31 or 32. The links can be selected in a conventional manner using the focus 22 and by depressing the soft key 4c shown in Figure 3. Alternatively, the links can be selected according to the invention by a relatively long key press of the 1-, 2- or 3- key to invoke accesskey functionality as just described.

### Short key press of 2-key

Referring again to Figure 5A, when the 2-key is pressed for a period less than the aforementioned threshold period e.g. less than five seconds, a character corresponding to the 2-key is inserted in the text editor corresponding to the input 27, resulting in a display as shown in Figure 5C. In this example, the input 27 results in the display of a text editor screen 33 into which, conventionally, the user can type alphanumeric characters such as a user name or password. In this example, a user name may be entered in order to provide access to a restricted area in the "Newsco" site. In accordance with the invention, operation of the 2-key for the relatively short period, automatically opens the text editor 33 shown in Figure 5C and simultaneously results in the insertion of a character 34 corresponding to the 2-key into the text editor. As shown in Figure 3, the 2-key of the keys 3, has associated with it a number of alpha characters, in this example "a, b, c" and these characters can be selected individually by successive operation of the 2-key in the manner conventionally used to compose a SMS. In this example, the character "a" referenced 34 in Figure 5C, is initially inserted. However, if the user had wished to enter the character "b" the key would be operated for a second time to change the character 34 to "b". A third operation would change the display to the character "c". If the user wished initially to enter another character, for example "g" as the character 34, then the 4-key would be initially depressed rather than the 2-key.

The selection process corresponding to the invention greatly speeds up the selection operation. If the user wishes to type information into the text editor 33 corresponding to input 27, the user can start relatively short duration key operations without having first to select the input 27 by scrolling the focus 22 with the key 4c. The relatively short duration operations of the keys will cause the text editor 33 to be automatically selected, with the character 34 inserted, irrespective of the location of focus 22 in the display of Figure 5A.

Similarly, a relatively long press of the appropriate key corresponding to the menu option in the screen display of Figure 5A, will result in the link being automatically selected, without the need to manipulate key 4c and focus 22.

The process carried out by micro-controller 8 to achieve this functionality is shown in Figure 6. At step S0, the duration of a key press is detected, for the key pad 3. If the key depression is detected at step S1 to be greater than the aforementioned threshold, then, accesskey functionality is invoked at step S2. Otherwise, at step S3, the input element functionality associated with input 27 is selected. Then at step S4, key data corresponding to individual relatively short key presses of the key are inserted into the text editor 33 of Figure 5C, so as to allow a user name or other alpha numeric data to be inserted, in the manner conventionally used to produce a SMS.

### Second embodiment

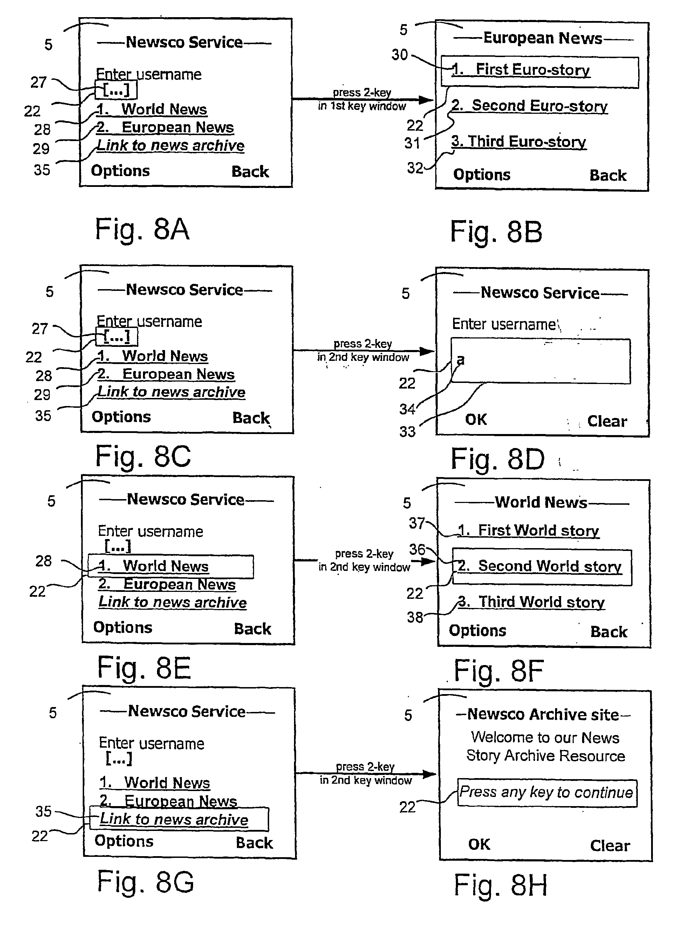

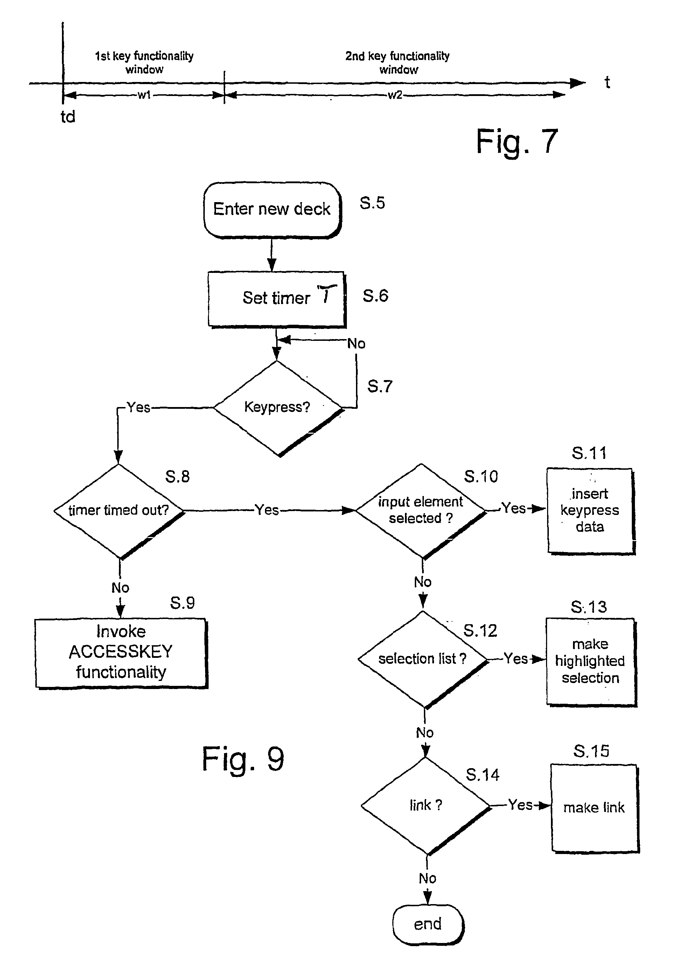

A second embodiment will now be described in which keys are individually operable in first and second successive time periods referred to herein as time windows, to provide different functionalities. The second embodiment is shown in Figures 7 to 9. Referring to Figure 7, when a deck is initially displayed at time t_{d}, the micro-controller 8 opens a first key functionality window w₁ with a duration of e.g. three seconds and thereafter opens a second key functionality window w₂. The first key functionality window w₁ is defined by an internal timer T. If the keys of the key pad 3 are pressed within the first key functionality window w₁, accesskey functionality is invoked. However, if the key is operated later, in the second key functionality window, different key functionalities are invoked depending on the selection made with the focus 22. This will now be explained in more detail with reference to Figure 8. Operation of the 2-key of the keys 3 will be described by way of example.

### Operation of 2-key in first window w₁

Figure 8A illustrates the initial screen display on display device 5, at time t_{d}, when the deck is first downloaded and displayed from the server 18. As previously described, the initial display includes an input element 27, together with a selection list of numbered links 28, 29 to other cards in the deck, and a further link 35 to another domain which may be provided by a different server. In this example, the link 35 provides access to an archive site for old archived news stories.

Referring to Figure 8A, when the 2-key is pressed within the first key functionality window w₁, accesskey functionality is invoked with the result that option 2 from the initial list of options is selected corresponding to the pressed key "2". In this example, the selection corresponds to link 29 - European news. As a result, a display corresponding to Figure 8B is provided. It will be understood that displays corresponding to option 1 can alternatively be provided by operating the 1-key of the keys 3 within the first key functionality window to provide a display corresponding to the link 28.

### Operation of 2-key in second key functionality window

After expiry of the first window w₁, the second key functionality window w₂ commences and the key functionality changes from accesskey to a functionality that depends upon the option in the display of Figure 8A that has been selected with focus 22.

Considering Figure 8C, this corresponds to Figure 8A i.e. with the link 27 selected. When the 2-key is pressed in the second period w₂, with link 27 selected, the input editor 33 is displayed as shown in Figure 8D and the alpha-character corresponding to the 2-key is inserted into the editing window, as shown by the character 34 in Figure 8D. As previously explained, the character display can be changed by successive operations of the 2-key in order to select "b" or "c", in the manner conventionally used to compose SMSs.

Referring to Figure 8E, when another numbered link in a selection list is selected by focus 22, operation of the 2-key within the second period w₂ causes a display of the selected link to be produced with the selection within the display being automatically selected as shown in Figure 8F. In this example, the internal link 28 - "World News" was initially selected with focus 22 so that when the 2-key was pressed, within the second period w₂, the World News card is displayed as shown in Figure 8F, with the focus 22 automatically moving to the second numbered option i.e. corresponding to the 2-key - "Second World story" 36. It will be understood that if the 1 or 2-key had been depressed during period w₂ corresponding menu options 1 and 2 would have been selected by focus 22 i.e. "First World story" 37 or "Third World story" 38. In a modification, the display of Figure 8F may be amended and the operation of the key during period w₂ selects automatically the text of the appropriate selected story. Thus in this example, the text of the Second World story 36 would be displayed immediately, without the intermediary of the display shown in Figure 8F.

Referring to Figure 8G, if an un-numbred link which does not form part of a numbered selection list - such as link 35, is selected by focus 22 initially, then, on operation of the 2-key within the second key functionality period w₂, the link is established to the relevant domain i.e. the Newsco archive site but, in contrast to Figure 8F, the option corresponding to the 2-key may not necessarily be selected, depending upon the attributes of the domain. Thus, a display is provided as shown in Figure 8H. This functionality can also be used for a selection list which selects unnumbered items on pages within a deck i.e. not involving a link to a different deck or domain.

The process steps performed by the micro-controller 8 are shown in Figure 9. At step S5, when a new deck is entered at time t_{d}, the internal timer T is initialised at step S6. When a key press is detected at step S7, a determination is made at step S8 of whether the timer has timed out i.e. whether the first key functionality window w₁ has expired. If not, accesskey functionality is invoked at step S9.

If the timer T has in fact timed out, a determination is made of whether an input element (i.e. element 27) has been selected at step S10. If so, key press data is inserted into the editor window 33 as described with reference to Figure 8D, at step S11.

If at step S12, it is determined that a selection list of internal links to pages within the displayed deck have been selected with focus 22, then at step S13, the selection highlighted by focus 22 is selected.

If however an external links has been selected by focus 32, this is detected at step S14 and the corresponding link is made as shown at step S 15.

Many modifications and variations of the described embodiments are possible and features of them may be used in combination. Furthermore whilst the described embodiments make use of a mobile handset MS1, it will be appreciated that the invention may be used with PDAs and other mobile computer devices. The PLMN need not be a GSM network and may operate according to any appropriate protocol such as UMTs. The invention is applicable to markup languages other than WAP, for example HTML which also includes an accesskey program element.

## Claims

1. A mobile telecommunications device for use as a client in a client-server system, including a user operable keypad (3) with keys that each have a predetermined assigned function, a display device (5), a processor (8) operable to provide user selectable displays of data derived from a server and a browser for displaying and navigating the data derived from the server in the display device (5), the processor being controllable by program elements associated with the display of data from the server that are selectable as different options in the display, wherein keys of the keypad (3) being operable in first and second time periods to provide first and second different key functionalities for controlling the display in the browser provided by the display device, wherein the time periods for the different key functionalities are defined by a first key functionality window of a predetermined duration (w1) occurring in response to commencement of a display of data by the display device, and a second key functionality window (w2) that occurs after expiry of the first key functionality window, whereby operation of the key within the first key functionality window invokes the first key functionality and operation of the key within the second key functionality window invokes the second key functionality, and wherein operation of the key within the first key functionality window invokes a functionality wherein a link is selected depending upon the depressed key.

2. A device according to claim 1 wherein operation of the key within the second key functionality window invokes a functionality dependent on a prior selection made in the display.

3. A device according to any preceding claim wherein the display is configured so that a focus (22) is selectively movable to select different options in the display and the second key functionality is dependent upon the option selected by means of the focus.

4. A device according to any one of the preceding claims wherein the program elements have an attribute associated with a respective predetermined assigned key function associated with an individual key of the keypad (3) and said attribute is invoked selectively in response to operation of the individual key in said second time period.

5. A device according to claim 4 wherein the program elements are from a text markup language and said attribute corresponds to an access key functionality.

6. A device according to any preceding claim which is WAP enabled.

7. A device according to any preceding claim and comprising a mobile telecommunications handset (MS1).

8. A device according to any preceding claim and comprising a PDA.

9. A client-server system including a server and at least one client as claimed in any preceding claim.

10. A method comprising:
operating a mobile telecommunications device as a client in a client-server system, the device including a user operable keypad (3) with keys that each have a predetermined assigned function, a display device (5), a processor (8) operable to provide user selectable displays of data derived from the server and a browser for displaying and navigating the data derived from the server in the display device (5), the processor being controllable by program elements associated with the display of data from the server that are selectable as different options in the display, and
operating a key of the keypad (3) in one of first and second time periods to provide one of first and second different key functionalities for controlling the display in the browser provided by the display device, wherein the time periods for the different key functionalities are defined by a first key functionality window of a predetermined duration (w1) occurring in response to commencement of a display of data by the display device, and a second key functionality window (w2) that occurs after expiry of the first key functionality window, whereby operation of the key within the first key functionality window invokes the first key functionality and operation of the key within the second key functionality window invokes the second key functionality, and wherein operation of the key within the first key functionality window invokes a functionality wherein a link is selected depending upon the depressed key.

## Patentansprüche

1. Mobiltelekommunikationsgerät, zur Verwendung als ein Client in einem Client-Server-System, mit einem durch einen Anwender betätigbaren Tastaturfeld (3) mit Tasten, die jede eine vorbestimmte zugeordnete Funktion besitzen, einer Anzeigeeinrichtung (5), einem Prozessor (8), der betreibbar ist, durch einen Anwender auswählbare und von einem Server erhaltene Datenanzeigen bereitzustellen, und einem Browser zum Anzeigen und Navigieren der vom Server erhaltenen Daten auf der Anzeigeeinrichtung (5), wobei der Prozessor durch der Datenanzeige vom Server zugeordnete und als verschiedene Optionen auf der Anzeige wählbare Programmelemente steuerbar ist, wobei Tasten des Tastenfelds (3) in einer ersten und einer zweiten Zeitspanne betätigbar sind, um erste und zweite unterschiedliche Tastenfunktionalitäten zur Steuerung der Anzeige im durch das Anzeigegerät bereitgestellten Browser bereitzustellen, wobei die Zeitspannen für die unterschiedlichen Tastenfunktionalitäten durch ein erstes, in Reaktion auf den Beginn einer Datenanzeige durch die Anzeigeeinrichtung erscheinendes Tastenfunktionalitätsfenster vorbestimmter Dauer (w1) und ein zweites, nach Ablauf des ersten Tastenfunktionalitätsfensters erscheinendes Tastenfunktionalitätsfenster (w2) definiert sind, wodurch eine Betätigung der Taste innerhalb des ersten Tastenfunktionalitätsfensters die erste Tastenfunktiohalität aufruft und eine Betätigung der Taste innerhalb des zweiten Tastenfunktionalitätsfensters die zweite Tastenfunktionalität aufruft, und wobei eine Betätigung der Taste innerhalb des ersten Tastenfunktionalitätsfensters eine Funktionalität aufruft, wobei ein Link in Abhängigkeit von der gedrückten Taste ausgewählt wird.

2. Gerät gemäß Anspruch 1, wobei ein Betätigen der Taste innerhalb des zweiten Tastenfunktionalitätsfensters eine Funktionalität abhängig von einer vorher auf der Anzeige getroffenen Auswahl auslöst.

3. Gerät gemäß einem der vorhergehenden Ansprüche, wobei die Anzeige konfiguriert ist, sodass ein Fokus (22) wahlweise beweglich ist, um unterschiedliche Optionen auf der Anzeige auszuwählen, und wobei die zweite Tastenfunktionalität von der mittels des Fokus ausgewählten Option abhängig ist.

4. Gerät gemäß einem der vorhergehenden Ansprüche, wobei die Programmelemente ein Attribut besitzen, das einer jeweiligen vorbestimmten zugewiesenen Tastenfunktion zugeordnet ist, die einer einzelnen Taste des Tastenfelds (3) zugeordnet ist, und wobei das Attribut wahlweise in Reaktion auf eine Betätigung der einzelnen Taste in der zweiten Zeitspanne aufgerufen wird.

5. Gerät gemäß Anspruch 4, wobei die Programmelemente aus einer Textauszeichnungssprache sind und die Attribute einer Zugriffsschlüsselfunktionalität entsprechen.

6. Gerät gemäß einem der vorhergehenden Ansprüche, wobei es WAP-fähig ist.

7. Gerät gemäß einem der vorhergehenden Ansprüche und mit einem mobilen Telekommunikationshandgerät (MS1).

8. Gerät gemäß einem der vorhergehenden Ansprüche und mit einem PDA.

9. Client-Server-System mit einem Server und wenigstens einem Client gemäß einem der vorhergehenden Ansprüche.

10. Verfahren mit:
Betreiben eines Mobiltelekommunikationsgeräts als Client in einem Client-Server-System, wobei das Gerät aufweist ein durch einen Anwender betätigbares Tastenfeld (3) mit jeweils eine vorbestimmte zugewiesene Funktion besitzenden Tasten, eine Anzeigeeinrichtung (5), einen Prozessor (8), der betreibbar ist, durch einen Anwender auswählbare vom Server erhaltene Datenanzeigen bereitzustellen, und einen Browser zum Darstellen und Navigieren der vom Server erhaltenen Daten auf der Anzeigeeinrichtung (5), wobei der Prozessor durch der Datenanzeige vom Server zugeordneten Programmelemente steuerbar ist, die als verschiedene Optionen auf der Anzeige wählbar sind, und Betätigen einer Taste des Tastenfelds (3) in einer ersten oder zweiten Zeitspanne, um eine erste oder eine zweite unterschiedliche Tastenfunktionalität zum Steuern der Anzeige im durch die Anzeigeeinrichtung bereitgestellten Browser bereitzustellen, wobei die Zeitspannen für die unterschiedlichen Tastenfunktionalitäten durch ein erstes, in Reaktion auf den Beginn einer Datenanzeige durch das Anzeigegerät erscheinendes Tastenfunktionalitätsfenster einer vorbestimmten Dauer (w1) und ein zweites, nach Ablauf des ersten Tastenfunktionalitätsfensters erscheinendes Tastenfunktionalitätsfenster (w2) definiert sind, wodurch ein Betätigen der Taste innerhalb des ersten Tastenfunktionalitätsfensters die erste Tastenfunktionalität aufruft und Betätigen der Taste innerhalb des zweiten Tastenfunktionalitätsfensters die zweite Tastenfunktionalität aufruft, und wobei Betätigen der Taste innerhalb des ersten Tastenfunktionalitätsfensters eine Funktionalität aufruft, wobei ein Link in Abhängigkeit von der gedrückten Taste ausgewählt wird.

## Revendications

1. Dispositif de télécommunication mobile, à usage d'un client dans un système serveur - client comportant un clavier exploitable par un utilisateur (3) avec des touches qui ont chacune une fonction attribuée prédéterminée, un dispositif d'affichage (5), un processeur (8) exploitable pour délivrer des affichages de données sélectionnables par un utilisateur dérivées à partir d'un serveur, et un navigateur pour afficher et naviguer dans les données provenant du serveur sur le dispositif d'affichage (5), le processeur étant contrôlable au moyen d'éléments de programme, associés à l'affichage de données provenant du serveur, qui sont sélectionnables en tant que des options distinctes sur l'affichage, dans lequel les touches du clavier (3) sont exploitables dans des première et seconde périodes de temps pour délivrer des première et seconde fonctionnalités de touches différentes pour commander l'affichage dans le navigateur fourni par le dispositif d'affichage, dans lequel les périodes de temps pour les différentes fonctionnalités de touches sont définies par une première fenêtre de fonctionnalité de touches d'une durée prédéterminée (w1) rencontrée en réponse à une initiation d'un affichage de données par le dispositif d'affichage, et par une seconde fenêtre de fonctionnalité de touches (w2) rencontrée après l'expiration de la première fenêtre de fonctionnalité de touches, moyennant quoi l'opération de la touche dans la première fenêtre de fonctionnalité de touches invoque la première fonctionnalité de touches et l'opération de la touche dans la seconde fenêtre de fonctionnalité de touches invoque la seconde fonctionnalité de touches, et dans lequel l'opération de la touche dans la première fenêtre de fonctionnalité de touches invoque une fonctionnalité dans laquelle un lien est sélectionné en fonction de la touche enfoncée.

2. Dispositif selon la revendication 1, dans lequel l'opération de la touche dans la seconde fenêtre de fonctionnalité de touches invoque une fonctionnalité dépendante d'une sélection préalable faite à l'affichage.

3. Dispositif selon l'une quelconque des revendications précédentes, dans lequel l'affichage est configuré de sorte qu'une cible (22) est déplaçable de façon sélective pour sélectionner différentes options sur l'affichage et la seconde fonctionnalité de touches est en fonction de l'option choisie par le biais de la cible.

4. Dispositif selon l'une quelconque des revendications précédentes dans lequel les éléments de programme ont un attribut associé à une fonction de touche affectée prédéterminée respective associée à une touche individuelle du clavier (3) et ledit attribut est invoqué de manière sélective en réponse à l'opération de la touche individuelle dans ladite seconde période de temps.

5. Dispositif selon la revendication 4 dans lequel les éléments de programme proviennent d'un langage de balisage de texte et dans lequel ledit attribut correspond à une fonctionnalité de touches d'accès.

6. Dispositif selon l'une quelconque des revendications précédentes, lequel prend en charge le protocole WAP.

7. Dispositif selon l'une quelconque des revendications précédentes et comportant un combiné de télécommunication mobile (MS1).

8. Dispositif selon l'une quelconque des revendications précédentes et comportant un assistant numérique personnel (PDA).

9. Système client - serveur, comportant un serveur et au moins un client selon l'une quelconque des revendications précédentes.

10. Procédé comportant les étapes consistant à :
exploiter un dispositif de télécommunication mobile en tant que client dans un système serveur - client, le dispositif comportant un clavier exploitable par un utilisateur (3) avec des touches qui ont chacune une fonction attribuée prédéterminée, un dispositif d'affichage (5), un processeur (8) exploitable pour délivrer des affichages de données sélectionnables par un utilisateur dérivées à partir d'un serveur et un navigateur pour afficher et naviguer dans les données provenant du serveur sur le dispositif d'affichage (5), le processeur étant contrôlable au moyen d'éléments de programme, associés à l'affichage de données provenant du serveur, qui sont sélectionnables en tant que des options distinctes sur l'affichage, et exploiter une touche du clavier (3) dans une des première et seconde périodes de temps pour délivrer un parmi des première et seconde fonctionnalités de touches différentes pour commander l'affichage dans le navigateur délivré par le dispositif d'affichage, dans lequel les périodes de temps pour les différentes fonctionnalités de touches sont définies par une première fenêtre de fonctionnalité de touches d'une durée prédéterminée (w1) rencontrée en réponse à une initiation d'un affichage de données par le dispositif d'affichage, et par une seconde fenêtre de fonctionnalité de touches (w2) rencontrée après l'expiration de la première fenêtre de fonctionnalité de touches, moyennant quoi l'opération de la touche dans la première fenêtre de fonctionnalité de touches invoque la première fonctionnalité de touches et l'opération de la touche dans la seconde fenêtre de fonctionnalité de touches invoque la seconde fonctionnalité de touches, et dans lequel l'opération de la touche dans la première fenêtre de fonctionnalité de touches invoque une fonctionnalité dans laquelle un lien est sélectionné en fonction de la touche enfoncée.
